# EUROPEAN PATENT SPECIFICATION

(11) **EP 3 319 798 B1**
(45) Date of publication and mention of the grant of the patent: **21.10.2020**
(21) Application number: 15897442.8
(22) Date of filing: 07.07.2015
(51) Int. Cl.: B32B 27/32, B32B 27/30

(54) **MULTILAYER FILMS AND METHODS OF MAKING SAME**
MEHRSCHICHTIGE FOLIEN UND VERFAHREN ZUR HERSTELLUNG DAVON
FILMS MULTICOUCHES ET PROCÉDÉS DE FABRICATION DE CES FILMS

(43) Date of publication of application: 16.05.2018
(73) Proprietor: ExxonMobil Chemical Patents Inc., Baytown TX 77520-2149 (US)
(72) Inventor: ZHU, Zhenyu, Shanghai 200136 (CN); SHEN, Zhiyi, Shanghai 201101 (CN); DEKONINCK, Jean-Marc, B-1320 Hamme-Mille (BE); QIN, Lijie, Beijing 100070 (CN)
(74) Representative: ExxonMobil Chemical Europe Inc.
(86) International application number: PCT/CN2015/083433
(87) International publication number: WO 2017/004786

(56) References cited:
- CN-A- 103 042 782
- JP-A- 2000 188 966
- JP-A- 2000 354 426
- JP-A- 2001 334 612
- JP-A- 2005 047 097
- JP-A- 2014 018 997
- JP-A- 2015 112 746
- US-A1- 2012 100 356

## Description

This invention relates to films, and in particular, to multilayer films for use in greenhouse applications comprising polyethylene, and methods for making such films.

### BACKGROUND OF THE INVENTION

A greenhouse is generally a reference to a structural building providing favorable environment for plants to grow inside, where air warmed by heat from warmed interior surfaces is retained in the building by its roof and wall. Based on different types of covering materials used for the roof and wall, greenhouses can be divided into glass greenhouses, plastic greenhouses. Polyethylene-based films have been popular in the market of covering materials for plastic greenhouse due to low cost and adequate mechanical properties (tear resistance, elongation). However, one longstanding problem with such films is that, when temperature of the film exterior surface exposed to the atmosphere environment drops below condensation point of water vapor, water droplets and fog would form on the film interior surface, which could reduce sunlight transmission and thus lead to retardant growth of plants in the greenhouse. Therefore, anti-dripping and anti-fogging performance has been amongst the most desired properties of greenhouse films to improve upon.

One conventional solution is to employ coextruded blown films of a three-layer structure to address the above problem. Anti-fog and anti-drip additives added in the core layer, driven by the content gradient between the core layer and the interior surface layer, can migrate to the film interior surface exposed to the inside of the greenhouse to reduce the surface tension to avoid formation of the foggy environment and water droplet on the interior surface of the film, and will then be washed off by water. Consequently, the content of these additives will gradually decrease in the film, which leads to anti-dripping and anti-fogging performance effective only for a limited period of time, generally about six to eight months, depending on starting levels of additives in the film. It is generally viewed as a difficulty to greenhouse film manufacturers to develop anti-dripping and anti-fogging performance having a service life beyond such time frame, e.g. of one year or longer, based on the current three-layer structure.

KR20140134186 discloses a polyethylene-based resin composition and, more particularly, a polyethylene-based resin composition comprising: (A) 60 to 90% of a copolymer of ethylene and C₃-C₂₀α-olefin; and (B) 10 to 40% of a copolymer of ethylene-vinyl acetate with respect to the whole weight of the polyethylene-based resin composition. The copolymer of ethylene and C₃-C₂₀ alpha-olefin has a density of 0.900 to 0.925 g/cm³, a melt flow rate (MI) of 0.1 to 5 and a molecular weight distribution (Mₙ/M_{w}) of 3 to 5. The copolymer of ethylene-vinyl acetate has a vinyl acetate content of 20 to 35%, a melt flow rate (MI) of 5 to 15 and a molecular weight distribution (Mₙ/M_{w}) of 3 to 5. The polyethylene-based resin composition has a melt flow rate (MI) of 0.7 to 2.0, a molecular weight distribution (Mₙ/M_{w}) of 3 to 5 and a dual melting point at melting temperature measured by a differential scanning calorimeter (DSC). The polyethylene-based resin composition can provide an agricultural film having improved transparency and mechanical strength.

JP2014209903 provides a polyolefin-based agricultural film having a middle layer between two polyolefin-based resin layers. The middle layer is a layer containing: an ethylene-vinyl acetate copolymer (note that a weight of the ethylene-vinyl acetate copolymer is 100 wt.%) in which a content of monomer units based on vinyl acetate is 15 to 30 wt.%; and methyl methacrylate-styrene copolymer particles with an average particle diameter of 3 to 15 µm.

KR20140048403relates to a film composition for agriculture, and more specifically, to a film composition for agriculture said to have an effect of increasing a grain yield and reducing a coating labor force and material costs by manufacturing a film for agriculture having improved mechanical strength, weather resistance, heat resistance, agricultural chemical resistance, whole length workability, transparency, heat insulation, and sustainability in near UV-blocking effect at 280-380 nm wavelength thereby preventing discoloration, degradation, oxidation, of the film for agriculture due to exposure to ultraviolet light for a long time and thus reported to be capable of being used for a long time.

KR101439752 discloses a polyethylene resin composition, and a resin composition for an agricultural film and an agricultural film comprising the same and, more specifically, a polyethylene resin composition including: an α olefin copolymer composed of ethylene and 2-20 carbon atoms; and ethylene-vinyl acetate copolymer including 20-35% of vinyl acetate, and a resin composition for an agricultural film and an agricultural film comprising the same. This publication reports that its composition can provide single-layer and multilayer agricultural film having high transparency and high stiffness by applying a polyethylene resin composition.

JPH11240112 provides an anti-fogging laminate has a layer (A-layer) comprising a resin and inorganic compound fine particles and a layer (B-layer) based on inorganic compound fine particles. The A-layer is a layer formed by drying a dispersion of a hydrophilic resin and inorganic compound fine particles and the B-layer may be a layer formed by drying a dispersion of inorganic compound fine particles. The inorganic compound fine particles contained in the A-layer and/or the B-layer are metal oxide fine particles and/or metal hydroxide fine particles. CN103042782 discloses a five layer film used in greenhouse applications.

As discussed above, there remains a need for a greenhouse film providing better migration of anti-dripping and anti-fogging agents towards the interior surface layer of greenhouse to improve anti-dripping and anti-fogging performance. Applicants have found that such objective can be achieved by applying a multilayer film of at least five layers, from the surface exposed to the atmosphere inwards, comprising a polyethylene in the outer layer, at least one of a polyethylene and ethylene-vinyl acetate (EVA) in the outer sub-layer, and EVA in each of the core layer, the inner sub-layer, and inner layer, with the vinyl acetate content (VA%) of the EVA in the core layer no lower than that in the inner sub-layer and the VA% of the EVA in the inner sub-layer no lower than that in the inner layer. The inventive film can increase efficiency of anti-dripping and anti-fogging agents via improved migration related to VA% of the EVA in different layers and polyethylene present in specific layers, thus can extend service life of anti-dripping and anti-fogging effect achievable with polyethylene-based films to a level of at least 12 months. Therefore, the inventive film described herein is well suited as a promising alternative to the conventional three-layer structure for greenhouse applications favoring better anti-dripping and anti-fogging performance.

### SUMMARY OF THE INVENTION

It is an object of the present invention to provide films, and in particular, to multilayer films used for greenhouse applications comprising polyethylene, and methods for making such films.

In one embodiment, the present invention encompaspses a multilayer film, as described in attached claims 1-13.

In another embodiment, the present invention relates to a method for making a multilayer film, as described in attached claim 14.

Preferably, the multilayer film described herein or made according to any method disclosed herein is a greenhouse film comprising at least one of an anti-dripping agent and an anti-fogging agent, and dripping area of the greenhouse film is present in an amount of no more than about 10% of the whole cladding area after cladding for 12 months.

### BRIEF DESCRIPTION OF THE DRAWINGS

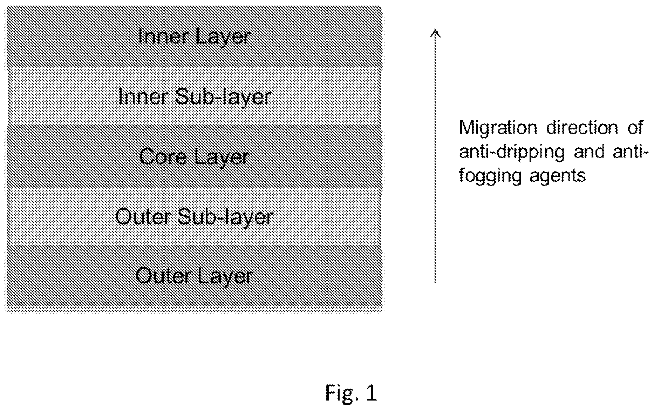

Figure 1 depicts a schematic representation of a film structure for the inventive films in the Example.

### DETAILED DESCRIPTION OF THE PRESENT INVENTION

Various specific embodiments, versions of the present invention will now be described, including preferred embodiments and definitions that are adopted herein.

As used herein, a "polymer" may be used to refer to homopolymers, copolymers, interpolymers, terpolymers. A "polymer" has two or more of the same or different monomer units. A "homopolymer" is a polymer having monomer units that are the same. A "copolymer" is a polymer having two or more monomer units that are different from each other. A "terpolymer" is a polymer having three monomer units that are different from each other. The term "different" as used to refer to monomer units indicates that the monomer units differ from each other by at least one atom or are different isomerically. Accordingly, the definition of copolymer, as used herein, includes terpolymers. Likewise, the definition of polymer, as used herein, includes copolymers. Thus, as used herein, the terms "polyethylene," "ethylene polymer," "ethylene copolymer," and "ethylene based polymer" mean a polymer or copolymer comprising at least 50 mol% ethylene units (preferably at least 70 mol% ethylene units, more preferably at least 80 mol% ethylene units, even more preferably at least 90 mol% ethylene units, even more preferably at least 95 mol% ethylene units or 100 mol% ethylene units (in the case of a homopolymer)). Furthermore, the term "polyethylene composition" means a composition containing one or more polyethylene components.

As used herein, when a polymer is referred to as comprising a monomer, the monomer is present in the polymer in the polymerized form of the monomer or in the derivative form of the monomer.

As used herein, when a polymer is said to comprise a certain percentage, wt%, of a monomer, that percentage of monomer is based on the total amount of monomer units in the polymer.

For purposes of this invention and the claims thereto, an ethylene polymer having a density of 0.910 to 0.940 g/cm³ is referred to as a "low density polyethylene" (LDPE); an ethylene polymer having a density of 0.890 to 0.930 g/cm³, typically from 0.910 to 0.930 g/cm³, that is linear and does not contain a substantial amount of long-chain branching is referred to as "linear low density polyethylene" (LLDPE) and can be produced with conventional Ziegler-Natta catalysts, vanadium catalysts, or with metallocene catalysts in gas phase reactors, high pressure tubular reactors, and/or in slurry reactors and/or with any of the disclosed catalysts in solution reactors ("linear" means that the polyethylene has no or only a few long-chain branches, typically referred to as a g'vis of 0.97 or above, preferably 0.98 or above); and an ethylene polymer having a density of more than 0.940 g/cm³ is referred to as a "high density polyethylene" (HDPE).

As used herein, "core layer", "outer layer", "outer sub-layer", "inner layer", and "inner sub-layer" are merely identifiers used for convenience, and shall not be construed as limitation on individual layers, their relative positions, or the laminated structure, unless otherwise specified herein.

As used herein, "first" polyethylene and "second" polyethylene are merely identifiers used for convenience, and shall not be construed as limitation on individual polyethylene, their relative order, or the number of polyethylenes used, unless otherwise specified herein.

As used herein, an outer sub-layer "substantially free of' EVA refers to an outer sub-layer substantially devoid of EVA, or comprising EVA in an amount of, e.g. less than about 1 wt%, based on total weight of the outer sub-layer.

As used herein, "cladding" refers to applying films over a structureunder greenhouse conditions as the roof and wall to test film performance after a defined period of time.

### Polyethylene

In one aspect of the invention, the polyethylenes that can be used for the multilayer film described herein include ethylene homopolymers, ethylene copolymers, and compositions thereof. Useful copolymers comprise one or more comonomers in addition to ethylene and can be a random copolymer, a statistical copolymer, a block copolymer, and/or compositions thereof. The method of making the polyethylene is not critical, as it can be made by slurry, solution, gas phase, high pressure or other suitable processes, and by using catalyst systems appropriate for the polymerization of polyethylenes, such as Ziegler-Natta-type catalysts, chromium catalysts, metallocene-type catalysts, other appropriate catalyst systems or combinations thereof, or by free-radical polymerization. In a preferred embodiment, the polyethylenes are made by the catalysts, activators and processes described in U.S. Patent Nos. 6,342,566; 6,384,142; and 5,741,563; and WO 03/040201 and WO 97/19991. Such catalysts are well known in the art, and are described in, for example, ZIEGLER CATALYSTS (Gerhard Fink, Rolf Mülhaupt and Hans H. Brintzinger, eds., Springer-Verlag 1995); Resconi et al.; and I, II METALLOCENE-BASED POLYOLEFINS (Wiley & Sons 2000).

Polyethylenes that are useful in this invention include those sold by ExxonMobil Chemical Company in Houston Texas, including HDPE, LLDPE, and LDPE; and those sold under the ENABLE™, EXACT™, EXCEED™, ESCORENE™, EXXCO™, ESCOR™, PAXON™, and OPTEMA™ tradenames.

Preferred ethylene homopolymers and copolymers useful in this invention typically have one or more of the following properties:
1. an M_{w} of 20,000 g/mol or more, 20,000 to 2,000,000 g/mol, preferably 30,000 to 1,000,000, preferably 40,000 to 200,000, preferably 50,000 to 750,000, as measured by size exclusion chromatography; and/or
2. a Tₘ of 30°C to 150°C, preferably 30°C to 140°C, preferably 50°C to 140°C, more preferably 60°C to 135°C, as determined based on ASTM D3418-03; and/or
3. a crystallinity of 5% to 80%, preferably 10% to 70%, more preferably 20% to 60%, preferably at least 30%, or at least 40%, or at least 50%, as determined based on ASTM D3418-03; and/or
4. a heat of fusion of 300 J/g or less, preferably 1 to 260 J/g, preferably 5 to 240 J/g, preferably 10 to 200 J/g, as determined based on ASTM D3418-03; and/or
5. a crystallization temperature (T_{c}) of 15°C to 130°C, preferably 20°C to 120°C, more preferably 25°C to 110°C, preferably 60°C to 125°C, as determined based on ASTM D3418-03; and/or
6. a heat deflection temperature of 30°C to 120°C, preferably 40°C to 100°C, more preferably 50°C to 80°C as measured based on ASTM D648 on injection molded flexure bars, at 66 psi load (455 kPa); and/or
7. a Shore hardness (D scale) of 10 or more, preferably 20 or more, preferably 30 or more, preferably 40 or more, preferably 100 or less, preferably from 25 to 75 (as measured based on ASTM D 2240); and/or
8. a percent amorphous content of at least 50%, preferably at least 60%, preferably at least 70%, more preferably between 50% and 95%, or 70% or less, preferably 60% or less, preferably 50% or less as determined by subtracting the percent crystallinity from 100.

The polyethylene may be an ethylene homopolymer, such as HDPE. In one embodiment, the ethylene homopolymer has a molecular weight distribution (M_{w}/Mₙ) or (MWD) of up to 40, preferably ranging from 1.5 to 20, or from 1.8 to 10, or from 1.9 to 5, or from 2.0 to 4. In another embodiment, the 1% secant flexural modulus (determined based on ASTM D790A, where test specimen geometry is as specified under the ASTM D790 section "Molding Materials (Thermoplastics and Thermosets)," and the support span is 2 inches (5.08 cm)) of the polyethylene falls in a range of 200 to 1000 MPa, and from 300 to 800 MPa in another embodiment, and from 400 to 750 MPa in yet another embodiment, wherein a desirable polymer may exhibit any combination of any upper flexural modulus limit with any lower flexural modulus limit. The MI of preferred ethylene homopolymers range from 0.05 to 800 dg/min in one embodiment, and from 0.1 to 100 dg/min in another embodiment, as measured based on ASTM D1238 (190°C, 2.16 kg).

In a preferred embodiment, the polyethylene comprises less than 20 mol% propylene units (preferably less than 15 mol%, preferably less than 10 mol%, preferably less than 5 mol%, and preferably 0 mol% propylene units).

In another embodiment of the invention, the polyethylene useful herein is produced by polymerization of ethylene and, optionally, an alpha-olefin with a catalyst having, as a transition metal component, a bis (n-C₃₋₄ alkyl cyclopentadienyl) hafnium compound, wherein the transition metal component preferably comprises from about 95 mol% to about 99 mol% of the hafnium compound as further described in U.S. Patent No. 9,956,088.

In another embodiment of the invention, the polyethylene is an ethylene copolymer, either random or block, of ethylene and one or more comonomers selected from C₃ to C₂₀ α-olefins, typically from C₃ to C₁₀ α-olefins. Preferably, the comonomers are present from 0.1 wt% to 50 wt% of the copolymer in one embodiment, and from 0.5 wt% to 30 wt% in another embodiment, and from 1 wt% to 15 wt% in yet another embodiment, and from 0.1 wt% to 5 wt% in yet another embodiment, wherein a desirable copolymer comprises ethylene and C₃ to C₂₀ α-olefin derived units in any combination of any upper wt% limit with any lower wt% limit described herein. Preferably the ethylene copolymer will have a weight average molecular weight of from greater than 8,000 g/mol in one embodiment, and greater than 10,000 g/mol in another embodiment, and greater than 12,000 g/mol in yet another embodiment, and greater than 20,000 g/mol in yet another embodiment, and less than 1,000,000 g/mol in yet another embodiment, and less than 800,000 g/mol in yet another embodiment, wherein a desirable copolymer may comprise any upper molecular weight limit with any lower molecular weight limit described herein.

In another embodiment, the ethylene copolymer comprises ethylene and one or more other monomers selected from the group consisting of C₃ to C₂₀ linear, branched or cyclic monomers, and in some embodiments is a C₃ to C₁₂ linear or branched alpha-olefin, preferably butene, pentene, hexene, heptene, octene, nonene, decene, dodecene, 4-methyl-pentene-1,3-methyl pentene-1,3,5,5-trimethyl-hexene-1. The monomers may be present at up to 50 wt%, preferably from up to 40 wt%, more preferably from 0.5 wt% to 30 wt%, more preferably from 2 wt% to 30 wt%, more preferably from 5 wt% to 20 wt%, based on the total weight of the ethylene copolymer.

Preferred linear alpha-olefins useful as comonomers for the ethylene copolymers useful in this invention include C₃ to C₈ alpha-olefins, more preferably 1-butene, 1-hexene, and 1-octene, even more preferably 1-hexene. Preferred branched alpha-olefins include 4-methyl-1-pentene, 3-methyl-1-pentene, 3,5,5-trimethyl-1-hexene, and 5-ethyl-1-nonene. Preferred aromatic-group-containing monomers contain up to 30 carbon atoms. Suitable aromatic-group-containing monomers comprise at least one aromatic structure, preferably from one to three, more preferably a phenyl, indenyl, fluorenyl, or naphthyl moiety. The aromatic-group-containing monomer further comprises at least one polymerizable double bond such that after polymerization, the aromatic structure will be pendant from the polymer backbone. The aromatic-group containing monomer may further be substituted with one or more hydrocarbyl groups including but not limited to C₁ to C₁₀ alkyl groups. Additionally, two adjacent substitutions may be joined to form a ring structure. Preferred aromatic-group-containing monomers contain at least one aromatic structure appended to a polymerizable olefinic moiety. Particularly, preferred aromatic monomers include styrene, alpha-methylstyrene, para-alkylstyrenes, vinyltoluenes, vinylnaphthalene, allyl benzene, and indene, especially styrene, paramethyl styrene, 4-phenyl-1-butene and allyl benzene.

Preferred diolefin monomers useful in this invention include any hydrocarbon structure, preferably C₄ to C₃₀, having at least two unsaturated bonds, wherein at least two of the unsaturated bonds are readily incorporated into a polymer by either a stereospecific or a non-stereospecific catalyst(s). It is further preferred that the diolefin monomers be selected from alpha, omega-diene monomers (i.e., di-vinyl monomers). More preferably, the diolefin monomers are linear di-vinyl monomers, most preferably those containing from 4 to 30 carbon atoms. Examples of preferred dienes include butadiene, pentadiene, hexadiene, heptadiene, octadiene, nonadiene, decadiene, undecadiene, dodecadiene, tridecadiene, tetradecadiene, pentadecadiene, hexadecadiene, heptadecadiene, octadecadiene, nonadecadiene, icosadiene, heneicosadiene, docosadiene, tricosadiene, tetracosadiene, pentacosadiene, hexacosadiene, heptacosadiene, octacosadiene, nonacosadiene, triacontadiene, particularly preferred dienes include 1,6-heptadiene, 1,7-octadiene, 1,8-nonadiene, 1,9-decadiene, 1,10-undecadiene, 1,11-dodecadiene, 1,12-tridecadiene, 1,13-tetradecadiene, and low molecular weight polybutadienes (Mw less than 1000 g/mol). Preferred cyclic dienes include cyclopentadiene, vinylnorbornene, norbornadiene, ethylidene norbornene, divinylbenzene, dicyclopentadiene, or higher ring containing diolefins with or without substituents at various ring positions.

In a preferred embodiment, one or more dienes are present in the polyethylene at up to 10 wt%, preferably at 0.00001 wt% to 2 wt%, preferably 0.002 wt% to 1 wt%, even more preferably 0.003 wt% to 0.5 wt%, based upon the total weight of the polyethylene. In some embodiments, diene is added to the polymerization in an amount of from an upper limit of 500 ppm, 400 ppm, or 300 ppm to a lower limit of 50 ppm, 100 ppm, or 150 ppm.

Preferred ethylene copolymers useful herein are preferably a copolymer comprising at least 50 wt% ethylene and having up to 50 wt%, preferably 1 wt% to 35 wt%, even more preferably 1 wt% to 6 wt% of a C₃ to C₂₀ comonomer, preferably a C₄ to C₈ comonomer, preferably hexene or octene, based upon the weight of the copolymer. Preferably these polymers are metallocene polyethylenes (mPEs).

Useful mPE homopolymers or copolymers may be produced using mono- or bis-cyclopentadienyl transition metal catalysts in combination with an activator of alumoxane and/or a non-coordinating anion in solution, slurry, high pressure or gas phase. The catalyst and activator may be supported or unsupported and the cyclopentadienyl rings may be substituted or unsubstituted. Several commercial products produced with such catalyst/activator combinations are commercially available from ExxonMobil Chemical Company in Houston, Texas under the tradename EXCEED™ Polyethylene or ENABLE™ Polyethylene.

In a class of embodiments, the multilayer film of the present invention comprises in the outer layer a first polyethylene (as a polyethylene defined herein) derived from ethylene and one or more C₃ to C₂₀ α-olefin comonomers, wherein the first polyethylene has a density of from about 0.900 to about 0.945 g/cm³, an MI, I_{2.16}, of from about 0.1 to about 15 g/10 min, anMWD of from about 1.5 to about 5.5, and an MIR, I_{21.6}/I_{2.16}, of from about 10 to about 100. In various embodiments, the first polyethylene may have one or more of the following properties:
(a) a density (sample prepared according to ASTM D-4703, and the measurement according to ASTM D-1505) of about 0.900 to 0.945 g/cm³, or about 0.915 to about 0.940 g/cm³;
(b) an MI (I_{2.16}, ASTM D-1238, 2.16 kg, 190°C) of about 0.1 to about 15 g/10 min, or about 0.1 to about 10 g/10 min, or about 0.1 to about 5 g/10 min;
(c) an MIR (I_{21.6} (190°C, 21.6 kg)/I_{2.16} (190°C, 2.16 kg)) of about 10 to about 100, or about 15 to about 90, or about 25 to about 80;
(d) a Composition Distribution Breadth Index ("CDBI") of greater than about 50%, or greater than about 60%, or greater than about 75%, or greater than about 85%. The CDBI may be determined using techniques for isolating individual fractions of a sample of the resin. The preferred technique is Temperature Rising Elution Fraction ("TREF"), as described in Wild, et al., J. Poly. Sci., Poly. Phys. Ed., Vol. 20, p. 441 (1982),
(e) an MWD of about 1.5 to about 5.5; MWD is measured using a gel permeation chromatograph ("GPC") equipped with a differential refractive index ("DRI") detector; and/or
(f) a branching index of about 0.5 to about 1.0, or about 0.7 to about 0.97. Branching Index is an indication of the amount of branching of the polymer and is defined as g'=[Rg]²*_{br}*/[Rg]²*ₗᵢₙ*. "Rg" stands for Radius of Gyration, and is measured using a Waters 150 gel permeation chromatograph equipped with a Multi-Angle Laser Light Scattering ("MALLS") detector, a viscosity detector and a differential refractive index detector. "[Rg]*_{br}*" is the Radius of Gyration for the branched polymer sample and "[Rg]*ₗᵢₙ*" is the Radius of Gyration for a linear polymer sample.

The first polyethylene is not limited by any particular method of preparation and may be formed using any process known in the art. For example, the first polyethylene may be formed using gas phase, solution, or slurry processes.

In one embodiment, the first polyethylene is formed in the presence of a Ziegler-Natta catalyst. In another embodiment, the first polyethylene is formed in the presence of a metallocene catalyst. For example, the first polyethylene may be an mPE produced using mono- or bis-cyclopentadienyl transition metal catalysts in combination with an activator of alumoxane and/or a non-coordinating anion in solution, slurry, high pressure or gas phase. The catalyst and activator may be supported or unsupported and the cyclopentadienyl rings may be substituted or unsubstituted. mPEs useful as the first polyethylene include those commercially available from ExxonMobil Chemical Company in Houston, Texas, such as those sold under the trade designation ENABLE™ or EXCEED™.

In accordance with another embodiment, the multilayer film described herein comprises in the outer sub-layer at least one of a second polyethylene and EVA. In a preferred embodiment, the second polyethylene in the outer sub-layer is a polyethylene derived from ethylene and one or more C₃ to C₂₀ α-olefin comonomers, wherein the second polyethylene has a density of from about 0.900 to about 0.945 g/cm³, an MI, I_{2.16}, of from about 0.1 to about 15 g/10 min, an MWD of from about 1.5 to about 5.5, and an MIR, I_{21.6}/I_{2.16}, of from about 10 to about 100. In various embodiments, the second polyethylene may have one or more of the properties or be prepared as defined above for the first polyethylene. Preferably, the second polyethylene in the outer sub-layer has a density higher than that of the first polyethylene in the outer layer.

In yet another embodiment, the multilayer film described herein comprises EVA in each of the core layer, the inner sub-layer, and the inner layer, and preferably comprises in the outer sub-layer at least one of a second polyethylene and EVA. The EVA may be a copolymer of ethylene and vinyl acetate, having a MI, I_{2.16}, of from about 0.2 to about 20 g/10 min, from about 0.2 to about 9 g/10 min, from about 0.2 to about 3 g/10 min, or from about 0.2 to about 1 g/10 min. The EVA may have a vinyl acetate content (VA%) of from about 5% to about 30%, from about 5% to about 20%, or from about 5% to about 10%. In particular, the vinyl acetate content (VA%) of the EVA in the core layer is no lower than that in the inner sub-layer, and the VA% of the EVA in the inner sub-layer is no lower than that in the inner layer. Preferably, the VA% of the EVA in the inner sub-layer is higher than that in the inner layer. EVA copolymers useful in the present invention may include those commercially available from ExxonMobil Chemical Company in Houston, Texas, such as Escorene™ Ultra FL series resins.

The outer layer of the multilayer film can include the first polyethylene described herein optionally in a blend with one or more other polymers, such as polyethylenes defined herein, which blend is referred to as polyethylene composition. In particular, the polyethylene compositions described herein may be physical blends or *in situ* blends of more than one type of polyethylene or compositions of polyethylenes with polymers other than polyethylenes where the polyethylene component is the majority component, e.g., greater than 50 wt% of the total weight of the composition. Preferably, the polyethylene composition is a blend of two polyethylenes with different MIs. In a preferred embodiment, the first polyethylene is present in an amount of at least about 60 wt%, preferably from about 60wt% to about 95 wt%, from about 70 wt% to about 90 wt%, or from about 80 wt% to about 90 wt%, based on total weight of the outer layer.

At least one of a second polyethylene and EVA described herein may be present in the outer sub-layer of the multilayer film optionally in a blend with one or more other polymers, such as polyethylenes defined herein, to form a composition, such as the polyethylene composition defined above. Preferably, the at least one of a second polyethylene and EVA is present in an amount of at least about 30 wt%, for example, anywhere between 30 wt%, 35 wt%, 40 wt%, 45 wt%, 50 wt%, 55 wt%, 60 wt%, 65 wt%, or 70 wt%, and 75 wt%, 80 wt%, 85 wt%, 90 wt%, 95 wt%, or 100 wt%, based on total weight of the outer sub-layer.In a preferred embodiment where the second polyethylene is a polyethylene derived from ethylene and one or more C₃ to C₂₀ α-olefin comonomers, having a density of from about 0.900 to about 0.945 g/cm³, an MI, I_{2.16}, of from about 0.1 to about 15 g/10 min, an MWD of from about 1.5 to about 5.5, and an MIR, I_{21.6}/I_{2.16}, of from about 10 to about 100, the outer sub-layer is substantially free of EVA.

In a preferred embodiment, the EVA described herein in at least one of the core layer, the inner sub-layer, and the inner layer is present in an amount of at least about 70 wt%, for example, from about 70 wt% to about 95 wt%, from about 75 wt% to about 90 wt%, or from about 80 wt% to about 85 wt%, based on total weight of the core layer, the inner sub-layer, and the inner layer, respectively.

In a class of embodiments, in addition to polyethylene as described above, the multilayer film of the present invention may further comprise other polymers, including without limitation other polyolefins, polar polymers, and cationic polymers, in any of the outer layer, the outer sub-layer, the core layer, the inner sub-layer, and the inner layer.

### Additives

One or more conventional additives may be incorporated into the multilayer film described herein, including, for example, stabilizers, antioxidants, processing aids, colorants or pigments. Especially, the multilayer film of the present invention may further comprise additives suitable for agriculture application purposes, including, but not limited to, anti-dripping agents, anti-fogging agents, UV stabilizers, heat retaining agents, anti-fungal agents, light diffusing agents or modifiers, and combinations thereof.

In a preferred embodiment, each of the outer layer, the outer sub-layer, the core layer, the inner sub-layer, and the inner layer of the multilayer film described herein further comprises an anti-dripping agent. Preferably, the amount of the anti-dripping agent is in descending order from the core layer, to the inner sub-layer, and to the inner layer, based on total weight of the core layer, the inner sub-layer, and the inner layer, respectively. In another preferred embodiment, each of the inner layer, the inner sub-layer, and the core layer further comprises an anti-fogging agent. Other additives, such as a UV stabilizer and a heat retaining agent (e.g. hydrotalcite), may also be employed in any or each layer of the multilayer film.

Any additive useful for the multilayer film may be provided separately or together with other additive(s) of the same or a different type in a pre-blended masterbatch, where the target concentration of the additive is reached by combining each neat additive component in an appropriate amount to make the final composition.

### Film Structures

The multilayer film of the present invention may further comprise additional layer(s), which may be any layer typically included in multilayer film constructions. For example, the additional layer(s) may be made from:
1. Polyolefins. Preferred polyolefins include homopolymers or copolymers of C₂ to C₄₀ olefins, preferably C₂ to C₂₀ olefins, preferably a copolymer of an α-olefin and another olefin or α-olefin (ethylene is defined to be an α-olefin for purposes of this invention). Preferably homopolyethylene, homopolypropylene, propylene copolymerized with ethylene and/or butene, ethylene copolymerized with one or more of propylene, butene or hexene, and optional dienes. Preferred examples include thermoplastic polymers such as ultra-low density polyethylene, very low density polyethylene, linear low density polyethylene, low density polyethylene, medium density polyethylene, high density polyethylene, polypropylene, isotactic polypropylene, highly isotactic polypropylene, syndiotactic polypropylene, random copolymer of propylene and ethylene and/or butene and/or hexene, elastomers such as ethylene propylene rubber, ethylene propylene diene monomer rubber, neoprene, and compositions of thermoplastic polymers and elastomers, such as, for example, thermoplastic elastomers and rubber toughened plastics.
2. Polar polymers. Preferred polar polymers include homopolymers and copolymers of esters, amides, acetates, anhydrides, copolymers of a C₂ to C₂₀ olefin, such as ethylene and/or propylene and/or butene with one or more polar monomers, such as acetates, anhydrides, esters, alcohol, and/or acrylics. Preferred examples include polyesters, polyamides, ethylene vinyl acetate copolymers, and polyvinyl chloride.
3. Cationic polymers. Preferred cationic polymers include polymers or copolymers of geminally disubstituted olefins, α-heteroatom olefins and/or styrenic monomers. Preferred geminally disubstituted olefins include isobutylene, isopentene, isoheptene, isohexane, isooctene, isodecene, and isododecene. Preferred α-heteroatom olefins include vinyl ether and vinyl carbazole, preferred styrenic monomers include styrene, alkyl styrene, para-alkyl styrene, α-methyl styrene, chloro-styrene, and bromo-para-methyl styrene. Preferred examples of cationic polymers include butyl rubber, isobutylene copolymerized with para methyl styrene, polystyrene, and poly-α-methyl styrene.
4. Miscellaneous. Other preferred layers can be paper, wood, cardboard, metal, metal foils (such as aluminum foil and tin foil), metallized surfaces, glass (including silicon oxide (SiOₓ) coatings applied by evaporating silicon oxide onto a film surface), fabric, spunbond fibers, and non-wovens (particularly polypropylene spunbond fibers or non-wovens), and substrates coated with inks, dyes, pigments.

In particular, a multilayer film can also include layers comprising materials such as ethylene vinyl alcohol (EVOH), polyamide (PA), polyvinylidene chloride (PVDC), or aluminium, so as to obtain barrier performance for the film where appropriate.

In one aspect of the invention, the multilayer film described herein may be produced in a stiff oriented form (often referred to as "pre-stretched" by persons skilled in the art) and may be useful for laminating to inelastic materials, such as polyethylene films, biaxially oriented polyester (e.g., polyethylene terephthalate (PET)) films, biaxially oriented polypropylene (BOPP) films, biaxially oriented polyamide (nylon) films, foil, paper, board, or fabric substrates, or may further comprise one of the above substrate films to form a laminate structure.

The thickness of the multilayer films may range from 10 to 200 µm in general and is mainly determined by the intended use and properties of the film. Conveniently, the film has a thickness of from about 10 to about 200 µm, from about 50 to about 180 µm, or from about 80 to about 150 µm. Preferably, the thickness ratio between the outer layer, the outer sub-layer, the core layer, the inner sub-layer, and the inner layer can be, for example, about 1:1:1:1:1, about 1:1:2:1:1, about 1:1:3:1:1, about 1:2:2:2:1, about 1:2:3:2:1, about 1:2:4:2:1, or vary in the range of any combination of the values recited herein.

The multilayer film described herein may have an A/B/X/C/D structure, wherein A is the outer layer, D is the inner layer, X represents the core layer between the outer layer and the inner layer, B is the outer sub-layer between the outer layer and the core layer, and C is the inner sub-layer between the inner layer and the core layer. The composition of these layers conforms to the limitations set out herein. In a preferred embodiment where the multilayer film is a greenhouse film comprising at least one of an anti-dripping agent and an anti-fogging agent, the at least one of an anti-dripping agent and an anti-fogging agent can migrate to the film surface facing the inside of the greenhouse in the direction of A to D.

In a preferred embodiment, the multilayer film is a greenhouse film having a five-layer A/B/X/C/D structure, comprising an outer layer, an inner layer, a core layer between the outer layer and the inner layer, an outer sub-layer between the outer layer and the core layer, and an inner sub-layer between the inner layer and the core layer, wherein (a) the outer layer comprises a first polyethylene derived from ethylene and one or more C₃ to C₂₀ α-olefin comonomers, wherein the first polyethylene has a density of from about 0.900 to about 0.945 g/cm³, an MI, I_{2.16}, of from about 0.1 to about 15 g/10 min, an MWD of from about 1.5 to about 5.5, and an MIR, I_{21.6}/I_{2.16}, of from about 10 to about 100, wherein the first polyethylene is present in an amount of at least about 60 wt%, based on total weight of the outer layer; (b) the outer sub-layer comprises at least one of a second polyethylene and ethylene-vinyl acetate (EVA), wherein at least one of a second polyethylene and EVA in the outer sub-layer is present in an amount of at least about 70 wt%, based on total weight of the outer sub-layer; (c) each of the core layer, the inner sub-layer, and the inner layer comprises EVA, wherein the EVA in each of the core layer, the inner sub-layer, and the inner layer is present in an amount of at least about 70 wt%, based on total weight of the core layer, the inner sub-layer, and the inner layer, respectively, wherein the VA% of the EVA in the core layer is no lower than that in the inner sub-layer, and the VA% of the EVA in the inner sub-layer is higher than that in the inner layer; (d) each of the outer layer, the outer sub-layer, the core layer, the inner sub-layer, and the inner layer further comprises an anti-dripping agent, wherein the amount of anti-dripping agent is in descending order from the core layer, to the inner sub-layer, and to the inner layer; and (e) each of the inner layer, the inner sub-layer, and the core layer further comprises an anti-fogging agent. Preferably, the outer layer is the layer facing the outside of the greenhouse, and the inner layer is the layer facing the inside of the greenhouse.

Preferably, the thickness ratio between the outer layer, the outer sub-layer, the core layer, the inner sub-layer, and the inner layer of the above multilayer film is about 1:1:1:1:1. Preferably, the second polyethylene in the outer sub-layer is a polyethylene derived from ethylene and one or more C₃ to C₂₀ α-olefin comonomers, wherein the second polyethylene has a density of from about 0.900 to about 0.945 g/cm³, an MI, I_{2.16}, of from about 0.1 to about 15 g/10 min, an MWD of from about 1.5 to about 5.5, and an MIR, I_{21.6}/I_{2.16}, of from about 10 to about 100, wherein the second polyethylene has a density higher than that of the first polyethylene in the outer layer, wherein the outer sub-layer is substantially free of EVA.

### Film Properties and Applications

In a preferred embodiment where the inventive multilayer film is a greenhouse film comprising at least one of an anti-dripping agent and an anti-fogging agent, dripping area of the greenhouse film is no more than about 10%, no more than about 5%, no more than about 3%, or no more than about 1% of the whole cladding area after cladding for 12 months, 16 months, or even 20 months. Preferably, the multilayer film has a creep resistance of no more than about 350%, no more than about 300%, no more than about 250%, or no more than about 150%.

It has been discovered that, by using the inventive structure of at least five layers described herein, certain greenhouse films can demonstrate significant advantage in anti-dripping and anti-fogging performance over a conventional three-layer structure. Specifically, when a multilayer film comprises an anti-dripping agent and/or an anti-fogging agent in each of the core layer, the inner sub-layer, and the inner layer, preferably with the amount of the anti-dripping agent in descending order from the core layer, to the inner sub-layer, and to the inner layer, since the vinyl acetate content (VA%) of the EVA in the core layer is no lower than that in the inner sub-layer and the VA% of the EVA in the inner sub-layer is no lower than that in the inner layer, the anti-dripping agent and anti-fogging agent can gradually migrate from the core layer to the inner layer at a desired rate leading to increased efficiency and extended service life of the anti-dripping and anti-fogging performance. Furthermore, in the case of the second polyethylene in the outer sub-layer having a density higher than that of the first polyethylene in the outer layer, the inventive film can better prevent migration of the anti-dripping agent and anti-fogging agent in the opposite direction, i.e. from the core layer to the outer layer, which can further facilitate the expected migration. In addition, in step with the above improved performance comes outstanding creep resistance. As a result, duration of anti-dripping and anti-fogging effect common in existing three-layer structures can be improved by the inventive film which provides a desired trend for future development of greenhouse films aiming at longer service life.

### Methods for Making the Multilayer Film

Also provided are methods for making multilayer films of the present invention. A method for making a multilayer film may comprise the steps of: (a) preparing an outer layer comprising a polyethylene derived from ethylene and one or more C₃ to C₂₀ α-olefin comonomers, wherein the polyethylene has a density of from about 0.900 to about 0.945 g/cm³, an MI, I_{2.16}, of from about 0.1 to about 15 g/10 min, a molecular weight distribution (MWD) of from about 1.5 to about 5.5, and an MIR, I_{21.6}/I_{2.16}, of from about 10 to about 100; (b) preparing an inner layer, a core layer between the outer layer and the inner layer, and an inner sub-layer between the inner layer and the core layer, wherein each of the core layer, the inner sub-layer, and the inner layer comprises EVA, wherein the VA% of the EVA in the core layer is no lower than that in the inner sub-layer, and the VA% of the EVA in the inner sub-layer is no lower than that in the inner layer; and (c) preparing an outer sub-layer between the outer layer and the core layer, wherein the outer layer comprises at least one of a polyethylene and EVA.

The multilayer films described herein may be formed by any of the conventional techniques known in the art including blown extrusion, cast extrusion, coextrusion, blow molding, casting, and extrusion blow molding.

In one embodiment of the invention, the multilayer films of the present invention may be formed by using blown techniques, i.e., to form a blown film. For example, the composition described herein can be extruded in a molten state through an annular die and then blown and cooled to form a tubular, blown film, which can then be axially slit and unfolded to form a flat film. As a specific example, blown films can be prepared as follows. The polymer composition is introduced into the feed hopper of an extruder, such as a 50 mm extruder that is water-cooled, resistance heated, and has an L/D ratio of 30:1. The film can be produced using a 28 cm W&H die with a 1.4 mm die gap, along with a W&H dual air ring and internal bubble cooling. The film is extruded through the die into a film cooled by blowing air onto the surface of the film. The film is drawn from the die typically forming a cylindrical film that is cooled, collapsed and, optionally, subjected to a desired auxiliary process, such as slitting, treating, sealing, or printing. Typical melt temperatures are from about 180°C to about 230°C. Blown film rates are generally from about 3 to about 25 kilograms per hour per inch (about 4.35 to about 26.11 kilograms per hour per centimeter) of die circumference. The finished film can be wound into rolls for later processing. A particular blown film process and apparatus suitable for forming films according to embodiments of the present invention is described in U.S. Patent No. 5,569,693. Of course, other blown film forming methods can also be used.

The compositions prepared as described herein are also suited for the manufacture of blown film in a high-stalk extrusion process. In this process, a polyethylene melt is fed through a gap (typically 0.5 to 1.6 mm) in an annular die attached to an extruder and forms a tube of molten polymer which is moved vertically upward. The initial diameter of the molten tube is approximately the same as that of the annular die. Pressurized air is fed to the interior of the tube to maintain a constant air volume inside the bubble. This air pressure results in a rapid 3-to-9-fold increase of the tube diameter which occurs at a height of approximately 5 to 10 times the die diameter above the exit point of the tube from the die. The increase in the tube diameter is accompanied by a reduction of its wall thickness to a final value ranging from approximately 10 to 50 µm and by a development of biaxial orientation in the melt. The expanded molten tube is rapidly cooled (which induces crystallization of the polymer), collapsed between a pair of nip rolls and wound onto a film roll.

In blown film extrusion, the film may be pulled upwards by, for example, pinch rollers after exiting from the die and is simultaneously inflated and stretched transversely sideways to an extent that can be quantified by the blow up ratio (BUR). The inflation provides the transverse direction (TD) stretch, while the upwards pull by the pinch rollers provides a machine direction (MD) stretch. As the polymer cools after exiting the die and inflation, it crystallizes and a point is reached where crystallization in the film is sufficient to prevent further MD or TD orientation. The location at which further MD or TD orientation stops is generally referred to as the "frost line" because of the development of haze at that location.

Variables in this process that determine the ultimate film properties include the die gap, the BUR and TD stretch, the take up speed and MD stretch and the frost line height. Certain factors tend to limit production speed and are largely determined by the polymer rheology including the shear sensitivity which determines the maximum output and the melt tension which limits the bubble stability, BUR and take up speed.

A laminate structure with the inventive multilayer film prepared as described herein can be formed by lamination to a substrate film using any process known in the art, including solvent based adhesive lamination, solvent less adhesive lamination, extrusion lamination, heat lamination, etc.

### EXAMPLE

The present invention, while not meant to be limited by, may be better understood by reference to the following example.

Three inventive film samples (Samples 1-3) were prepared with a 120 µm A/B/X/C/D five-layer structure at a layer thickness ratio of 1:1:1:1:1 and then put into field cladding test. Polyethylene and additive products used in the samples include: ENABLE™ 20-10HA mPE resin (density: 0.920 g/cm³, MI: 1.0 g/10min) (ExxonMobil Chemical Company, Houston, Texas, USA), ENABLE™ 27-05HH mPE resin (density: 0.927 g/cm³, MI: 0.5 g/10min) (ExxonMobil Chemical Company, Houston, Texas, USA), EXCELLEN™ GMH GH051 polyethylene resin (density: 0.921 g/cm³, MI: 0.8 g/10min) (Sumitomo Chemical Co., Ltd., Japan), ESCORENE™ Ultra FL 00014 EVA copolymer resin (density: 0.937 g/cm³, MI: 0.25 g/10min, VA%: 14.0) (ExxonMobil Chemical Company, Houston, Texas, USA), ESCORENE™ Ultra FL 00018 EVA copolymer resin (density: 0.940 g/cm³, MI: 0.37 g/10min, VA%: 17.5) (ExxonMobil Chemical Company, Houston, Texas, USA), EVA 2030 EVA copolymer (density: 0.927 g/cm³, MI: 0.8 g/10min, VA%: 6.5) (Hanwha Chemical Co., Ltd., Korea), EVA 2040 EVA copolymer (density: 0.929 g/cm³, MI: 0.8 g/10min, VA%: 9.5) (Hanwha Chemical Co., Ltd., Korea), KF-650 anti-dripping agent (Riken Vitamin Co., Ltd., Japan), TS-403 anti-fogging agent (Taiwan Fluoro Technology Co., Ltd., Taiwan), CHIMASSORB™ 944 UV stabilizer (BASF SE, Germany), Tinuvin™ 788 UV stabilizer (BASF SE, Germany), UV-531 UV stabilizer (Xinji City Taida Sinopec Co., Ltd., China), and STABIACE HT-P hydrotalcite (Sakai Chemical Industry Co., Ltd., Japan). All additives were provided at a pre-determined concentration in the form of a pre-blended masterbatch.

Anti-dripping performance was evaluated after cladding for 16 months by measuring dripping area on the tested film samples and is represented by percentage of the dripping area relative to the total area of the films.

Creep resistance as used herein refers to a film's ability to resist distortion when under a load over an extended period of time and was measured according to a method specifically developed by the Applicant on a creep testing rack (Shanghai Liming Machinery Co., Ltd., China). Samples were about 15 mm in width and about 250 mm in length and were conditioned at 23°C ± 2°C and 50% ± 10% relative humidity for at least 40 hours prior to determination. Samples were mounted onto the rack with lower ends pinched by a Hoffman clamp bearing a 1.3 kg load at 50°C.Creep resistance is expressed by percentage of the elongated film length in machine direction (MD) after five hours relative to the original film length.

Structure-wise formulations of the film samples and corresponding anti-dripping performance and creep resistance are listed below in Table 1.

**Table 1: Structure-wise formulations (wt%), anti-dripping performance and creep resistance of Samples 1-3**

| **Sample No.** | **1** | **2** | **3** |
|---|---|---|---|
| Inner layer | EVA 2040 (62) EVA 2030 (21) Masterbatch of KF-650 and TS-403 (6) KF-650 masterbatch (7) Masterbatch of CHIMASSORB™ 944, Tinuvin™ 788,and UV-531 (4) | EVA 2040 (62) EVA 2030 (21) Masterbatch of KF-650 and TS-403 (6) KF-650 masterbatch (7) Masterbatch of CHIMASSORB™ 944, Tinuvin™ 788,and UV-531(4) | EVA 2040 (62) EVA 2030 (21) Masterbatch of KF-650 and TS-403 (6) KF-650 masterbatch (7) Masterbatch of CHIMASSORB™ 944, Tinuvin™ 788,and UV-531(4) |
| Inner sub-layer | ESCORENE™ Ultra FL 00018 (80) Masterbatch of KF-650 and TS-403 (6) KF-650 masterbatch (10) Masterbatch of CHIMASSORB™ 944, Tinuvin™ 788,and UV-531(3) STABIACE HT-P masterbatch (1) | ESCORENE™ Ultra FL 00014 (80) Masterbatch of KF-650 and TS-403 (6) KF-650 masterbatch (10) Masterbatch of CHIMASSORB™ 944, Tinuvin™ 788,and UV-531(3) STABIACE HT-Pmasterbatch (1) | ESCORENE™ Ultra FL 00014 (80) Masterbatch of KF-650 and TS-403 (6) KF-650 masterbatch (10) Masterbatch of CHIMASSORB™ 944, Tinuvin™ 788,and UV-531(3) STABIACE HT-Pmasterbatch (1) |
| Core layer | ESCORENE™ Ultra FL 00018 (80) Masterbatch of KF-650 and TS-403 (6) KF-650 masterbatch (12) Masterbatch of CHIMASSORB™ 944, Tinuvin™ 788,and UV-531(2) | ESCORENE™ Ultra FL 00018 (80) Masterbatch of KF-650 and TS-403 (6) KF-650 masterbatch (12) Masterbatch of CHIMASSORB™ 944, Tinuvin™ 788,and UV-531(2) | ESCORENE™ Ultra FL 00018 (80) Masterbatch of KF-650 and TS-403 (6) KF-650 masterbatch (12) Masterbatch of CHIMASSORB™ 944, Tinuvin™ 788,and UV-531(2) |
| Outer sub-layer | EVA 2040 (40.5) EXCELLEN™ GMH GH051 (40.5) KF-650 masterbatch (14) Masterbatch of CHIMASSORB™ 944, Tinuvin™ 788,and UV-531(4) STABIACE HT-P masterbatch (1) | EVA 2040 (40.5) EXCELLEN™ GMH GH051 (40.5) KF-650 masterbatch (14) Masterbatch of CHIMASSORB™ 944, Tinuvin™ 788,and UV-531(4) STABIACE HT-P masterbatch (1) | ENABLE™ 27-05HH (81) KF-650 masterbatch (14) Masterbatch of CHIMASSORB™ 944, Tinuvin™ 788,and UV-531(4) STABIACE HT-Pmasterbatch (1) |
| Outer layer | ENABLE™ 20-10HA (66) EXCELLEN™ GMH GH051 (22) KF-650 masterbatch (4) Masterbatch of CHIMASSORB™ 944, Tinuvin™ 788,and UV-531(8) | ENABLE™ 20-10HA (66) EXCELLEN™ GMH GH051 (22) KF-650 masterbatch (4) Masterbatch of CHIMASSORB™ 944, Tinuvin™ 788,and UV-531(8) | ENABLE™ 20-10HA (66) EXCELLEN™ GMH GH051 (22) KF-650 masterbatch (4) Masterbatch of CHIMASSORB™ 944, Tinuvin™ 788,and UV-531(8) |
| Anti -dripping performance (%) | 5 | 3 | 0 |
| Creep resistance (%) | 307 | 203 | 148 |

As shown in Table 1, anti-dripping performance remained well in effect after 16 months for all three inventive samples with dripping area appearing in a level as low as no more than about 5% of the whole cladding area, which exceeds the common service life of six to eight months normally seen with the conventional three-layer films. In addition, there was no fog visible within the greenhouse clad by the inventive samples. Especially, it is noteworthy that Sample 3 outperformed the other two by substantial absence of dripping area formed as well as the best creep resistance of all samples, indicating that the higher density of the polyethylene in the outer sub-layer than that of the polyethylene in the outer layer plays arole in improving film performance.

Particularly, without being bound by theory, it is believed that the specific relationship between VA% of the EVA in the core layer, the inner sub-layer, and the inner layer, preferably in combination with presence of a polyethylene having a higher density in the outer sub-layer than that of the polyethylene in the outer layer, can achieve desirable migration of anti-dripping and anti-fogging agents to extend duration of the anti-dripping and anti-fogging effect for greenhouse films.

## Claims

1. A multilayer film, comprising an outer layer, an inner layer, a core layer between the outer layer and the inner layer, an outer sub-layer between the outer layer and the core layer, and an inner sub-layer between the inner layer and the core layer, wherein
(a) the outer layer comprises a first polyethylene derived from ethylene and one or more C₃ to C₂₀ α-olefin comonomers, wherein the first polyethylene has a density (sample prepared according to ASTM D-4703, and the measurement according to ASTM D-1505) of from 0.900 to 0.945 g/cm³, a melt index (MI), I_{2.16}, of from 0.1 to 15 g/10 min, a molecular weight distribution (MWD, measured using a gel permeation chromatograph equipped with a differential refractive index detector) of from 1.5 to 5.5, and a melt index ratio (MIR), I_{21.6}/I_{2.16}, of from 10 to 100;
(b) the outer sub-layer comprises at least one of a second polyethylene and ethylene-vinyl acetate (EVA), wherein the second polyethylene has a density higher than that of the first polyethylene; and
(c) each of the core layer, the inner sub-layer, and the inner layer comprises EVA, wherein the vinyl acetate content (VA%) of the EVA in the core layer is no lower than that in the inner sub-layer, and the VA% of the EVA in the inner sub-layer is higher than that in the inner layer.

2. The multilayer film of claim 1, wherein the first polyethylene in the outer layer is present in an amount of at least 60 wt%, based on total weight of the outer layer.

3. The multilayer film of claim 1, wherein at least one of a second polyethylene and EVA in the outer sub-layer is present in an amount of at least 30 wt%, based on total weight of the outer sub-layer.

4. The multilayer film of claim 1, wherein the EVA in at least one of the core layer, the inner sub-layer, and the inner layer is present in an amount of at least 70 wt%, based on total weight of the core layer, the inner sub-layer, and the inner layer, respectively.

5. The multilayer film of claim 1, wherein the second polyethylene in the outer sub-layer is a polyethylene derived from ethylene and one or more C₃ to C₂₀ α-olefin comonomers, wherein the second polyethylene has a density of from 0.900 to 0.945 g/cm³, an MI, I_{2.16}, of from 0.1 to 15 g/10 min, an MWD of from 1.5 to 5.5, and an MIR, I_{21.6}/I_{2.16}, of from 10 to 100.

6. The multilayer film of claim 5, wherein the second polyethylene in the outer sub-layer has a density higher than that of the first polyethylene in the outer layer.

7. The multilayer film of claim 5, wherein the outer sub-layer is substantially free of EVA.

8. The multilayer film of claim 1, wherein each of the outer layer, the outer sub-layer, the core layer, the inner sub-layer, and the inner layer further comprises an anti-dripping agent.

9. The multilayer film of claim 8, wherein the amount of the anti-dripping agent is in descending order from the core layer, to the inner sub-layer, and to the inner layer, based on total weight of the core layer, the inner sub-layer, and the inner layer, respectively.

10. The multilayer film of claim 1, wherein each of the inner layer, the inner sub-layer, and the core layer further comprises an anti-fogging agent.

11. The multilayer film of claim 1, wherein the thickness ratio between the outer layer, the outer sub-layer, the core layer, the inner sub-layer, and the inner layer is 1:1:1:1:1.

12. The multilayer film of claim 1, wherein the multilayer film is a greenhouse film comprising at least one of an anti-dripping agent and an anti-fogging agent, and dripping area of the greenhouse film is no more than 10% of the whole cladding area after cladding for 12 months.

13. A greenhouse film, comprising an outer layer, an inner layer, a core layer between the outer layer and the inner layer, an outer sub-layer between the outer layer and the core layer, and an inner sub-layer between the inner layer and the core layer, wherein;
(a) the outer layer comprises a first polyethylene derived from ethylene and one or more C₃ to C₂₀ α-olefin comonomers, wherein the first polyethylene has a density of from 0.900 to 0.945 g/cm³, an MI, I_{2.16}, of from 0.1 to 15 g/10 min, an MWD of from 1.5 to 5.5, and an MIR, I_{21.6}/I_{2.16}, of from 10 to 100, wherein the first polyethylene is present in an amount of at least 60 wt%, based on total weight of the outer layer;
(b) the outer sub-layer comprises at least one of a second polyethylene and ethylene-vinyl acetate (EVA), wherein the second polyethylene has a density higher than that of the first polyethylene, and wherein the at least one of a second polyethylene and EVA in the outer sub-layer is present in an amount of at least 70 wt%, based on total weight of the outer sub-layer;
(c) each of the core layer, the inner sub-layer, and the inner layer comprises EVA, wherein the EVA in each of the core layer, the inner sub-layer, and the inner layer is present in an amount of at least 70 wt%, based on total weight of the core layer, the inner sub-layer, and the inner layer, respectively, wherein the VA% of the EVA in the core layer is no lower than that in the inner sub-layer, and the VA% of the EVA in the inner sub-layer is higher than that in the inner layer;
(d) each of the outer layer, the outer sub-layer, the core layer, the inner sub-layer, and the inner layer further comprises an anti-dripping agent, wherein the amount of anti-dripping agent is in descending order from the core layer, to the inner sub-layer, and to the inner layer; and
(e) each of the inner layer, the inner sub-layer, and the core layer further comprises an anti-fogging agent;
wherein after cladding for 12 months, dripping area of the greenhouse film is present in an amount of no more than 10% of the whole cladding area.

14. A method for making a multilayer film, comprising the steps of:
(a) preparing an outer layer comprising a first polyethylene derived from ethylene and one or more C₃ to C₂₀ α-olefin comonomers, wherein the first polyethylene has a density of from 0.900 to 0.945 g/cm³, an MI, I_{2.16}, of from 0.1 to 15 g/10 min, an MWD of from 1.5 to 5.5, and an MIR, I_{21.6}/I_{2.16}, of from 10 to 100;
(b) preparing an inner layer, a core layer between the outer layer and the inner layer, and an inner sub-layer between the inner layer and the core layer, wherein each of the core layer, the inner sub-layer, and the inner layer comprises EVA, wherein the VA% of the EVA in the core layer is no lower than that in the inner sub-layer, and the VA% of the EVA in the inner sub-layer is no lower than that in the inner layer; and
(c) preparing an outer sub-layer between the outer layer and the core layer, wherein the outer layer comprises at least one of a second polyethylene and EVA.

## Patentansprüche

1. Mehrschichtige Folie, die eine äußere Schicht, eine innere Schicht, eine Kernschicht zwischen der äußeren Schicht und der inneren Schicht, eine äußere Unterschicht zwischen der äußeren Schicht und der Kernschicht, und eine innere Unterschicht zwischen dper inneren Schicht und der Kernschicht umfasst, bei der
(a) die äußere Schicht erstes Polyethylen umfasst, das von Ethylen und einem oder mehreren C₃- bis C₂₀-α-Olefincomonomeren abgeleitet ist, wobei das erste Polyethylen eine Dichte (wobei die Probe gemäß ASTM D-4703 hergestellt und die Messung gemäß ASTM D-1505 durchgeführt wird) von 0,900 bis 0,945 g/cm³, einen Schmelzindex (MI), I_{2,16}, von 0,1 bis 15 g/10 min, eine Molekulargewichtsverteilung (MWD, gemessen unter Verwendung eines Gelpermeationschromatographen, der mit einem Brechungsindexdetektor ausgestattet ist), von 1,5 bis 5,5, und ein Schmelzindexverhältnis (MIR), I_{21.6}/I_{2,16}, von 10 bis 100 aufweist,
(b) die äußere Unterschicht mindestens eines von zweitem Polyethylen und Ethylen-Vinylacetat (EVA) umfasst, wobei das zweite Polyethylen eine höhere Dichte als das erste Polyethylen aufweist, und
(c) jede von der Kernschicht, der inneren Unterschicht und der inneren Schicht EVA umfasst, wobei der Vinylacetatgehalt (VA%) des EVA in der Kernschicht nicht niedriger als derjenige in der inneren Unterschicht ist, und der VA% des EVA in der inneren Unterschicht höher als derjenige in der inneren Schicht ist.

2. Mehrschichtige Folie nach Anspruch 1, bei der das erste Polyethylen in der äußeren Schicht in einer Menge von mindestens 60 Gew.% vorhanden ist, bezogen auf das Gesamtgewicht der äußeren Schicht.

3. Mehrschichtige Folie nach Anspruch 1, bei der mindestens eines von zweitem Polyethylen und EVA in der äußeren Unterschicht in einer Menge von mindestens 30 Gew.% vorhanden ist, bezogen auf das Gesamtgewicht der äußeren Unterschicht.

4. Mehrschichtige Folie nach Anspruch 1, bei der das EVA in mindestens einer von der Kernschicht, der inneren Unterschicht und der inneren Schicht in einer Menge von mindestens 70 Gew.% vorhanden ist, bezogen auf das Gesamtgewicht der Kernschicht, der inneren Unterschicht beziehungsweise der inneren Schicht.

5. Mehrschichtige Folie nach Anspruch 1, bei der das zweite Polyethylen in der äußeren Unterschicht Polyethylen ist, das von Ethylen und einem oder mehreren C₃- bis C₂₀-α-Olefincomonomeren abgeleitet ist, wobei das zweite Polyethylen eine Dichte von 0,900 bis 0,945 g/cm³, einen MI, I_{2,I6} von 0,1 bis 15 g/10 min, eine MWD von 1,5 bis 5,5 und ein MIR, I_{21,6}/I_{2,16} von 10 bis 100 aufweist.

6. Mehrschichtige Folie nach Anspruch 5, bei der das zweite Polyethylen in der äußeren Unterschicht eine höhere Dichte als das erste Polyethylen in der äußeren Schicht aufweist.

7. Mehrschichtige Folie nach Anspruch 5, bei der die äußere Unterschicht im Wesentlichen frei von EVA ist.

8. Mehrschichtige Folie nach Anspruch 1, bei der jede von der äußeren Schicht, der äußeren Unterschicht, der Kernschicht, der inneren Unterschicht und der inneren Schicht des Weiteren ein Tropfschutzmittel umfasst.

9. Mehrschichtige Folie nach Anspruch 8, bei der die Menge des Tropfschutzmittels von der Kernschicht zu der inneren Unterschicht und zu der inneren Schicht in absteigender Reihenfolge ist, bezogen auf das Gesamtgewicht der Kernschicht, der inneren Unterschicht beziehungsweise der inneren Schicht.

10. Mehrschichtige Folie nach Anspruch 1, bei der jede von der inneren Schicht, der inneren Unterschicht und der Kernschicht des Weiteren Antibeschlagmittel umfasst.

11. Mehrschichtige Folie nach Anspruch 1, bei der das Dickenverhältnis zwischen der äußeren Schicht, der äußeren Unterschicht, der Kernschicht, der inneren Unterschicht und der inneren Schicht 1:1:1:1:1 beträgt.

12. Mehrschichtige Folie nach Anspruch 1, die eine Treibhausfolie ist, die mindestens eines von einem Tropfschutzmittel und einem Antibeschlagmittel umfasst, und wobei die Tropffläche der Treibhausfolie nicht mehr als 10 % der gesamten Verkleidungsfläche nach Verkleidung für 12 Monate beträgt.

13. Treibhausfolie, die eine äußere Schicht, eine innere Schicht, eine Kernschicht zwischen der äußeren Schicht und der inneren Schicht, eine äußere Unterschicht zwischen der äußeren Schicht und der Kernschicht, und eine innere Unterschicht zwischen der inneren Schicht und der Kernschicht umfasst, bei der
(a) die äußere Schicht erstes Polyethylen umfasst, das von Ethylen und einem oder mehreren C₃- bis C₂₀-α-Olefincomonomeren abgeleitet ist, wobei das erste Polyethylen eine Dichte von 0,900 bis 0,945 g/cm³, einen MI, I_{2,16}, von 0,1 bis 15 g/10 min, eine MWD von 1,5 bis 5,5, und ein MIR, I_{21,6}/I_{2,16} von 10 bis 100 aufweist, wobei das erste Polyethylen in einer Menge von mindestens 60 Gew.% vorhanden ist, bezogen auf das Gesamtgewicht der äußeren Schicht,
(b) die äußere Unterschicht mindestens eines von zweitem Polyethylen und Ethylen-Vinylacetat (EVA) umfasst, wobei das zweite Polyethylen eine höhere Dichte als das erste Polyethylen aufweist, und wobei das mindestens eine von zweitem Polyethylen und EVA in der äußeren Unterschicht in einer Menge von mindestens 70 Gew.% vorhanden ist, bezogen auf das Gesamtgewicht der äußeren Unterschicht,
(c) jede von der Kernschicht, der inneren Unterschicht und der inneren Schicht EVA umfasst, wobei das EVA in jeder von der Kernschicht, der inneren Unterschicht und der inneren Schicht in einer Menge von mindestens 70 Gew.% vorhanden ist, bezogen auf das Gesamtgewicht der Kernschicht, der inneren Unterschicht beziehungsweise der inneren Schicht, wobei der VA% des EVA in der Kernschicht nicht niedriger als derjenige in der inneren Unterschicht ist, und der VA% des EVA in der inneren Unterschicht höher als derjenige in der inneren Schicht ist,
(d) jede von der äußeren Schicht, der äußeren Unterschicht, der Kernschicht, der inneren Unterschicht und der inneren Schicht des Weiteren ein Tropfschutzmittel umfasst, wobei die Menge des Tropfschutzmittels von der Kernschicht zu der inneren Unterschicht und zu der inneren Schicht in absteigender Reihenfolge ist, und
(e) jede von der inneren Schicht, der inneren Unterschicht und der Kernschicht des Weiteren Antibeschlagmittel umfasst,
wobei nach dem Verkleiden für 12 Monate die Tropf fläche in einer Menge von nicht mehr als 10 % der gesamten Verkleidungsfläche vorhanden ist.

14. Verfahren zum Herstellen einer mehrschichtigen Folie, bei dem in den folgenden Schritten
(a) eine äußere Schicht hergestellt wird, die erstes Polyethylen umfasst, das von Ethylen und einem oder mehreren C₃- bis C₂₀-α-Olefincomonomeren abgeleitet ist, wobei das erste Polyethylen eine Dichte von 0,900 bis 0,945 g/cm³, einen MI, I_{2,16}, von 0,1 bis 15 g/10 min, eine MWD von 1,5 bis 5,5 und ein MIR, I_{21,6}/I_{2,16}, von 10 bis 100 aufweist,
(b) eine innere Schicht, eine Kernschicht zwischen der äußeren Schicht und der inneren Schicht, und eine innere Unterschicht zwischen der inneren Schicht und der Kernschicht hergestellt wird, wobei jede von der Kernschicht, der inneren Unterschicht und der inneren Schicht EVA umfasst, wobei der VA% des EVA in der Kernschicht nicht niedriger als derjenige in der inneren Unterschicht ist, und der VA% des EVA in der inneren Unterschicht nicht niedriger als derjenige in der inneren Schicht ist, und
(c) eine äußere Unterschicht zwischen der äußeren Schicht und der Kernschicht hergestellt wird, wobei die äußere Schicht mindestens eines von zweitem Polyethylen und EVA umfasst.

## Revendications

1. Film multicouche, comprenant une couche externe, une couche interne, une couche centrale entre la couche externe et la couche interne, une sous-couche externe entre la couche externe et la couche centrale, et une sous-couche interne entre la couche interne et la couche centrale, dans lequel :
(a) la couche externe comprend un premier polyéthylène dérivé d'éthylène et d'un ou plusieurs comonomères d'a-oléfines C₃-C₂₀, le premier polyéthylène ayant une densité (échantillon préparé selon ASTM D-4703, et mesure réalisée selon ASTM D-1505) de 0,900 à 0,945 g/cm³, un indice de fusion (IF), I_{2,16}, de 0,1 à 15 g/10 min, une distribution de masse moléculaire (DMM, mesurée en utilisant un chromatographe à perméation de gel équipé d'un détecteur d'indice de réfraction différentiel) de 1,5 à 5,5, et un rapport d'indices de fusion (RIF), I_{21,6}/I_{2,16}, de 10 à 100 ;
(b) la sous-couche externe comprend au moins l'un d'un deuxième polyéthylène et de l'éthylène-acétate de vinyle (EVA), le deuxième polyéthylène ayant une densité supérieure à celle du premier polyéthylène ; et
(c) chacune de la couche centrale, de la sous-couche interne et de la couche interne comprend de l'EVA, la teneur en acétate de vinyle (% AV) de l'EVA dans la couche centrale n'étant pas inférieure à celle dans la sous-couche interne, et le % AV de l'EVA dans la sous-couche interne étant supérieur à celui dans la couche interne.

2. Film multicouche selon la revendication 1, dans lequel le premier polyéthylène dans la couche externe est présent dans une quantité d'au moins 60 % en poids, relativement au poids total de la couche externe.

3. Film multicouche selon la revendication 1, dans lequel au moins l'un d'un deuxième polyéthylène et de l'EVA dans la sous-couche externe est présent dans une quantité d'au moins 30 % en poids, relativement au poids total de la sous-couche externe.

4. Film multicouche selon la revendication 1, dans lequel l'EVA dans au moins l'une de la couche centrale, de la sous-couche interne et de la couche interne est présent dans une quantité d'au moins 70 % en poids, relativement au poids total de la couche centrale, de la sous-couche interne, et de la couche interne, respectivement.

5. Film multicouche selon la revendication 1, dans lequel le deuxième polyéthylène dans la sous-couche externe est un polyéthylène dérivé d'éthylène et d'un ou plusieurs comonomères d'a-oléfines C₃-C₂₀, dans lequel le deuxième polyéthylène a une densité de 0,900 à 0,945 g/cm³, un IF, I_{2,16}, de 0,1 à 15 g/10 min, une DMM de 1,5 à 5,5, et un RIF, I_{21,6}/I_{2,16}, de 10 à 100.

6. Film multicouche selon la revendication 5, dans lequel le deuxième polyéthylène dans la sous-couche externe a une densité supérieure à celle du premier polyéthylène dans la couche externe.

7. Film multicouche selon la revendication 5, dans lequel la sous-couche externe est sensiblement exempte d'EVA.

8. Film multicouche selon la revendication 1, dans lequel chacune de la couche externe, de la sous-couche externe, de la couche centrale, de la sous-couche interne et de la couche interne comprend en outre un agent anti-égouttement.

9. Film multicouche selon la revendication 8, dans lequel la quantité de l'agent anti-égouttement est dans l'ordre décroissant à partir de la couche centrale, jusqu'à la sous-couche interne, et jusqu'à la couche interne, relativement au poids total de la couche centrale, de la sous-couche interne, et de la couche interne, respectivement.

10. Film multicouche selon la revendication 1, dans lequel chacune de la couche interne, de la sous-couche interne, et de la couche centrale comprend en outre un agent antibuée.

11. Film multicouche selon la revendication 1, dans lequel le rapport d'épaisseur entre la couche externe, la sous-couche externe, la couche centrale, la sous-couche interne, et la couche interne, est de 1:1:1:1:1.

12. Film multicouche selon la revendication 1, le film multicouche étant un film de serre comprenant au moins l'un d'un agent anti-égouttement et d'un agent antibuée, et la surface d'égouttement du film de serre ne dépassant pas 10 % de la surface totale de couverture après 12 mois de couverture.

13. Film de serre, comprenant une couche externe, une couche interne, une couche centrale entre la couche externe et la couche interne, une sous-couche externe entre la couche externe et la couche centrale, et une sous-couche interne entre la couche interne et la couche centrale, dans lequel :
(a) la couche externe comprend un premier polyéthylène dérivé d'éthylène et d'un ou plusieurs comonomères d'a-oléfines C₃-C₂₀, le premier polyéthylène ayant une densité de 0,900 à 0,945 g/cm³, un IF, I_{2,16}, de 0,1 à 15 g/10 min, une DMM de 1,5 à 5,5, et un RIF, I_{21,6}/I_{2,16}, de 10 à 100, le premier polyéthylène étant présent dans une quantité d'au moins 60 % en poids, relativement au poids total de la couche externe ;
(b) la sous-couche externe comprend au moins l'un d'un deuxième polyéthylène et de l'éthylène-acétate de vinyle (EVA), le deuxième polyéthylène ayant une densité supérieure à celle du premier polyéthylène, et ledit au moins l'un d'un deuxième polyéthylène et de l'EVA dans la sous-couche externe étant présent dans une quantité d'au moins 70 % en poids, relativement au poids total de la sous-couche externe ;
(c) chacune de la couche centrale, de la sous-couche interne, et de la couche interne comprend de l'EVA, l'EVA dans chacune de la couche centrale, de la sous-couche interne et de la couche interne étant présent dans une quantité d'au moins 70 % en poids, relativement au poids total de la couche centrale, de la sous-couche interne, et de la couche interne, respectivement, le % AV de l'EVA dans la couche centrale n'étant pas inférieur à celui dans la sous-couche interne, et le % AV de l'EVA dans la sous-couche interne étant supérieur à celui dans la couche interne ;
(d) chacune de la couche externe, de la sous-couche externe, de la couche centrale, de la sous-couche interne et de la couche interne comprend en outre un agent anti-égouttement, la quantité d'agent anti-égouttement étant dans l'ordre décroissant à partir de la couche centrale, jusqu'à la sous-couche interne, et jusqu'à la couche interne ; et
(e) chacune de la couche interne, de la sous-couche interne et de la couche centrale comprend en outre un agent antibuée ; dans lequel, après 12 mois de couverture, la surface d'égouttement du film de serre est présente à un niveau ne dépassant pas 10 % de la surface totale de couverture.

14. Procédé de fabrication d'un film multicouche, comprenant les étapes qui consistent à :
(a) préparer une couche externe comprenant un premier polyéthylène dérivé d'éthylène et d'un ou plusieurs comonomères d'α-oléfines C₃-C₂₀, le premier polyéthylène ayant une densité de 0,900 à 0,945 g/cm³, un IF, I_{2,16}, de 0,1 à 15 g/10 min, une DMM de 1,5 à 5,5, et un RIF, I_{21,6}/I_{2,16}, de 10 à 100 ;
(b) préparer une couche interne, une couche centrale entre la couche externe et la couche interne, et une sous-couche interne entre la couche interne et la couche centrale, chacune de la couche centrale, de la sous-couche interne et de la couche interne comprenant de l'EVA, le % AV de l'EVA dans la couche centrale n'étant pas inférieur à celui dans la sous-couche interne, et le % AV de l'EVA dans la sous-couche interne n'étant pas inférieur à celui dans la couche interne ; et
(c) préparer une sous-couche externe entre la couche externe et la couche centrale, la couche externe comprenant au moins l'un d'un deuxième polyéthylène et de l'EVA.
